(19) **Europäisches Patentamt European Patent Office Office européen des brevets**

(11) **EP 1 466 996 B1**

(12) **FASCICULE DE BREVET EUROPEEN**

(45) Date de publication et mention de la délivrance du brevet:
**12.11.2014 Bulletin 2014/46**

(51) Int Cl.:
*C23C 10/06* *(2006.01)* *C23C 16/08* *(2006.01)*
*C23C 10/14* *(2006.01)*

(21) Numéro de dépôt: **04290714.7**

(22) Date de dépôt: **16.03.2004**

(54) **Procédé pour former sur un métal un revêtement protecteur contenant de l'aluminium et du zirconium**

Verfahren zum Herstellen einer Schutzbeschichtung enthaltend Aluminium und Zirkonium auf einem Metal

Method of producing a protective coating comprising aluminium and zirconium on a metal

(84) Etats contractants désignés:
**DE FR GB IT RO SE**

(30) Priorité: **02.04.2003 FR 0304104**

(43) Date de publication de la demande:
**13.10.2004 Bulletin 2004/42**

(73) Titulaires:
• **ONERA (Office National d'Etudes et de Recherches Aérospatiales)**
**92320 Châtillon (FR)**
Etats contractants désignés:
**DE FR GB IT RO SE**
• **SNECMA**
**75015 Paris (FR)**
Etats contractants désignés:
**DE FR GB IT**

(72) Inventeurs:
• **Bacos, Marie Pierre**
**92160 Antony (FR)**
• **Josso, Pierre**
**92130 Issy les Moulineaux (FR)**
• **Navéos, Serge**
**92290 Chatenay-Malabry (FR)**

(74) Mandataire: **de Kernier, Gabriel et al**
**Cabinet Netter**
**Conseils en Propriété Industrielle**
**36, avenue Hoche**
**75008 Paris (FR)**

(56) Documents cités:
**EP-A- 0 821 078    WO-A-02/055754**
**FR-A- 1 221 455    US-A- 3 486 927**
**US-A- 5 455 071    US-B1- 6 291 014**

## Description

L'invention concerne un procédé pour former sur la surface d'un superalliage à base de nickel un revêtement protecteur contenant de l'aluminium, dans lequel on met en contact ledit superalliage et un précurseur non gazeux contenant de l'aluminium, à une température élevée, avec une atmosphère contenant un gaz actif qui réagit avec le précurseur pour former un composé d'aluminium gazeux, lequel se décompose au contact du superalliage en y déposant de l'aluminium métallique.

Un tel procédé, connu sous le nom d'aluminisation, ou cémentation activée, est décrit dans FR 1433497 A. Il est utilisé pour la réalisation par diffusion de revêtements en alliage de type Ni-Al servant de couche intermédiaire entre le substrat en superalliage à base de nickel des pièces chaudes de moteurs d'avions et la barrière de protection thermique de ce substrat, permettant d'améliorer aussi bien la tenue de la barrière sur le substrat que la capacité de ce dernier à conserver des caractéristiques d'usage en cas de dégradation de la barrière thermique.

Ce procédé connu se déroule en régime statique. Le substrat et un cément contenant de l'aluminium sont enfermés dans une boite semi-étanche, celle-ci limitant fortement les échanges gazeux avec l'atmosphère extérieure. Durant le traitement, température et pression sont maintenues constantes. Il s'instaure ainsi, durant le processus de dépôt, un régime quasi-stationnaire et des conditions de proche équilibre sont obtenues entre cément et phase gazeuse d'une part, phase gazeuse et substrat d'autre part.

Pour aluminiser un substrat à base de nickel on choisit un cément donneur à base de chrome, où l'activité de Al est plus grande que dans le nickel à concentration en aluminium égale.

Le revêtement obtenu est constitué essentiellement par la phase β-NiAl de structure cubique simple. Cette phase possède un large domaine de non stoechiométrie allant de NiAl$^{(+)}$ (57 % en atomes) à NiAl$^{(-)}$ (37 % en atomes). Cette phase est aluminoformeur et ne donne pas lieu à une diffusion prépondérante de Al ou de Ni.

Au cours de l'aluminisation il s'instaure un processus cyclique de dépôt d'aluminium se poursuivant continuellement jusqu'à ce que l'activité en aluminium de la surface du substrat devienne égale à celle imposée par le cément.

Le processus d'aluminisation d'un substrat se décompose en quatre étapes:

1. formation à partir du cément d'une phase gazeuse assurant le transport de l'aluminium,
2. transport de cette phase gazeuse vers le substrat à revêtir,
3. réactions de dismutation et de réduction à la surface du substrat avec libération d'aluminium,
4. diffusion solide de l'aluminium déposé dans le substrat tendant à diminuer son activité en surface.

La vitesse globale de ce processus à quatre étapes consécutives est gouvernée par la vitesse de l'étape la plus lente. Le procédé s'effectue en enceinte semi-étanche, où les échanges gazeux avec l'extérieur sont très limités. On peut admettre que les vitesses des réactions chimiques aux interfaces gaz-solide sont très élevées par rapport à celles des mécanismes de diffusion. Ainsi la cinétique globale de ce processus est gouvernée par l'importance relative de la diffusion dans la phase gazeuse et de la diffusion solide dans le revêtement en cours d'élaboration.

En premier, pour que tout ce processus ait lieu il faut que l'atmosphère dans laquelle le dépôt se forme n'interagisse pas avec ses mécanismes de formation. C'est pourquoi le gaz de couverture sera soit neutre (argon) soit réducteur (hydrogène). De même, pour qu'un transport en phase gazeuse de l'aluminium ait lieu il faut que cet élément soit présent dans l'atmosphère. Cette présence est assurée par une molécule appelée "activateur". Son action est simple: l'activateur corrode le cément donneur pour former un halogénure d'aluminium gazeux. L'agent corrosif (un acide halogéné) est renouvelé à chaque dismutation sur le substrat receveur.

Dès lors l'activateur choisi doit être gazeux à la température du revêtement et ne doit pas produire de polluants. C'est pour cette raison que les activateurs généralement utilisés sont le chlorure d'ammonium $NH_4Cl$, le fluorure d'ammonium $NH_4F$ et le bifluorure d'ammonium $NH_4F,HF$. En présence d'hydrogène ou sous gaz neutre et à température élevée, ces molécules se décomposent selon

$$NH_4X \rightarrow NH_3 + HX$$

où X représente Cl ou F.

La température de vaporisation dépend de la nature du sel halogéné choisi. Par exemple, elle est de 340 °C pour le chlorure d'ammonium. Dans le procédé connu, l'activateur n'est utilisé que pour transporter en toute sécurité un acide halogéné dans le réacteur où le dépôt doit être effectué, c'est à dire la boîte semi-étanche. Le cation lié à cet halogène (ici l'ammonium) est par voie de conséquence inutile.

Par ailleurs, divers travaux ont montré l'effet favorable du zirconium sur l'adhérence d'une couche d'oxyde sur un substrat métallique, que cette couche soit formée par exposition à l'air à haute température ou par dépôt d'une barrière thermique. Cependant aucun procédé utilisable industriellement n'a été proposé pour introduire cet élément dans un revêtement protecteur contenant de l'aluminium.

Le but de l'invention est d'aménager à cet effet le procédé connu décrit plus haut.

L'invention vise notamment un procédé du genre défini en introduction, et prévoit que ladite atmosphère contient un composé gazeux d'un métal modificateur qui se décompose au contact du substrat en y déposant ledit métal modificateur, simultanément au dépôt d'aluminium selon revendication 1.

Des caractéristiques optionnelles de l'invention, complémentaires ou de substitution, sont énoncées ci-après:

- Ledit gaz actif est constitué au moins en partie par ledit composé gazeux.

- Ledit gaz actif est constitué exclusivement par ledit composé gazeux.

- Ledit gaz actif contient en outre au moins un composé d'ammonium.

- Ledit gaz actif et/ou ledit composé gazeux sont formés par vaporisation d'au moins une substance solide à température ambiante, mélangée audit précurseur.

- Le substrat contient au moins un élément qui se combine avec l'aluminium pour former dans le revêtement un composé intermétallique dans lequel l'aluminium est partiellement substitué par le métal modificateur.

- Ledit élément du substrat est le nickel et ledit composé intermétallique est $\beta$-NiAl.

- Ledit gaz actif contient au moins un composé choisi parmi $NH_4Cl$, $NH_4F$ et $NH_4F$, HF.

- Ledit précurseur est un alliage d'aluminium et de chrome.

- Le substrat et le précurseur sont distants l'un de l'autre.

- Le substrat est disposé au-dessus du précurseur.

- Le substrat et le précurseur sont disposés dans une enceinte n'autorisant que des échanges limités avec l'extérieur.

- Ladite atmosphère est formée, outre le gaz actif et le composé gazeux, d'un gaz inerte ou réducteur et de préférence d'hydrogène.

- L'élément modificateur est contenu dans ledit revêtement protecteur en une concentration massique inférieure à 0,5 %.

- Ladite concentration massique est comprise entre 500 et 1000 ppm et de préférence d'environ 800 ppm.

- Ladite température élevée est comprise entre 950 et 1200 °C et de préférence d'environ 1080 °C.

Les caractéristiques et avantages de l'invention seront exposés plus en détail dans la description ci-après, en se référant aux dessins annexés.

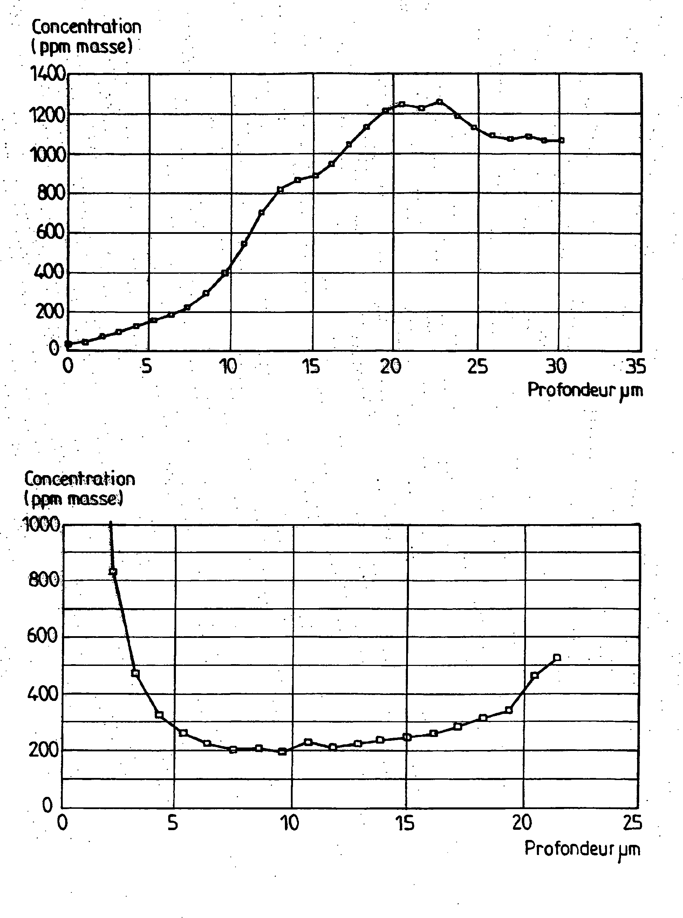

Les figures 1 et 2 sont des graphiques montrant la répartition du zirconium dans des revêtements obtenus par le procédé selon l'invention.

Dans le procédé selon l'invention, l'halogénure d'ammonium du procédé connu est remplacé au moins en partie par un composé de l'élément que l'on souhaite voir présent dans le dépôt à l'état de traces, notamment $ZrOCl_2$.

$ZrOCl_2$ présente l'avantage d'être gazeux au-delà de 250 °C. Pour des raisons de commodité et de sécurité il est avantageux d'utiliser l'oxychlorure de zirconium.

Le principe du dépôt reste identique à celui du procédé antérieur: une boite semi-étanche en alliage nickel-chrome ou en acier réfractaire de type NCD 16 contient du cément sous forme de granulés grossiers, d'un diamètre de grains compris entre un millimètre et quelque centimètres. Les pièces à revêtir sont suspendues à quelque centimètres au-dessus du cément de façon à être plongées dans le flux d'halogénure d'aluminium gazeux. Selon l'invention, l'halogénure d'ammonium est remplacé en tout ou en partie par de l'oxychlorure de zirconium. Ce dernier en s'évaporant conduit à la formation d'une vapeur riche en chlorure de zirconium qui se dismute à la surface du substrat en superalliage à base de nickel pour former du zirconium à l'état métallique d'une part et un acide halogéné disponible pour former dans le cément donneur un halogénure d'aluminium d'autre part. Le zirconium déposé à la surface du substrat diffuse ensuite dans le revêtement de $\beta$-NiAl en cours de formation pour donner, in fine, un intermétallique enrichi entre 500 et 1000 ppm de zirconium.

En variante, les pièces à revêtir sont en contact avec le cément, comme par exemple selon la technique de cémentation en caisse où les pièces sont immergées dans le cément en poudre.

Ce principe général est illustré par les exemples qui suivent, sans que ces derniers aient un caractère limitatif quelconque.

Exemple comparatif

Cet exemple illustre l'art antérieur. Dans une boite semi-étanche on dispose un cément donneur d'aluminium constitué d'un alliage chrome-aluminium dans les proportions massiques de 70 % de chrome pour 30 % d'aluminium. On y ajoute 10 g de bifluorure d'ammonium $NH_4F$, HF en tant qu'activateur pour 1000 g de cément (1 % en masse). Les pièces à traiter sont placées au-dessus du mélange cément + activateur. Après un traitement de 6 heures à 1080 °C sous hydrogène on obtient la formation d'un revêtement de $\beta$-NiAl stoechiométrique. Ce revêtement a une épaisseur d'environ 50

μm. Sa microstructure est classique: une couche monophasée de β-NiAl, d'une épaisseur d'environ de 40 μm, surmonte une zone d'interdiffusion d'environ 10 μm d'épaisseur où sont présentes des phases TCP riches en éléments insolubles ou peu solubles dans la phase β. L'apparition de ces phases est due à la diffusion du nickel vers le revêtement.

Exemple 1

On procède comme dans l'exemple comparatif en remplaçant le bifluorure d'ammonium par une quantité équivalente (mole pour mole) d'oxychlorure de zirconium. À l'issue du traitement on obtient un revêtement d'une épaisseur d'environ 50 μm. Cependant, à la diffé-rence du cas précédent, ce dépôt présente trois zones distinctes. Dans le substrat, la zone d'interdiffusion, d'une épaisseur de 10 μm environ, est classique. Cette zone est surmontée par un revêtement de β-NiAl monophasé d'une épaisseur d'environ 40 μm. Enfin, une zone supplémentaire d'une épaisseur d'environ 10 μm est constituée d'une matrice en β-NiAl contenant des précipités de chrome-zirconium. Une analyse du profil de concentration sur une épaisseur de 20 μm par spectroscopie de masse (Glow Discharge Mass Spectroscopy, GDMS) montre que le zirconium est concentré dans les premiers micromètres et que sa concentration dans le reste du revêtement est d'environ 200 parties par million (ppm) en masse.

Exemple 2

On procède comme dans l'exemple 1 en remplaçant le cément donneur d'aluminium-chrome à 30 % d'aluminium par un cément à base de chrome à 20 % d'aluminium. Cette diminution de l'activité en aluminium a pour but de favoriser une meilleure répartition du zirconium dans l'ensemble du revêtement. Comme dans l'exemple précédent, la température de traitement est de 1080 °C et l'atmosphère de travail de l'hydrogène. Cependant, pour compenser la faible activité de l'aluminium, la durée du traitement est allongée à 16 heures. À l'issue de ce traitement, on obtient un revêtement d'une épaisseur d'environ 50 μm. Ce revêtement est constitué de deux parties: une zone d'interdiffusion de 10 μm en-viron contenant les phases TCP classiques et un revêtement proprement dit d'une épaisseur d'environ 40 μm et constitué d'une matrice de β-NiAl stoechiométrique contenant du zirconium en solution solide et exempt de précipité. Une analyse GDMS donne le profil de concentration en zirconium tel que montré sur la figure 1 (concentration massique en ppm en fonction de la profondeur en μm).

Cette analyse confirme l'hypothèse selon laquelle le zirconium se dépose en premier à la surface du substrat à revêtir puis diffuse à l'état solide au travers de la couche d'aluminiure de nickel en cours de formation.

Exemple 3

On se propose, dans cet exemple, de montrer qu'il est possible de piloter la concentration en zirconium obtenue dans le revêtement par une simple dilution de la quantité d'activateur à base de Zr. Pour ce faire on procède comme dans l'exemple comparatif en remplaçant une partie seulement du bifluorure d'ammonium (l'activateur) par de l'oxychlorure de zirconium. Dans le cas présent, le rapport $ZrOCl_2/NH_4F$, HF en moles est de 1/9. Ici aussi on obtient un revêtement d'aluminiure de nickel d'une épaisseur d'environ 50 μm avec une cou-che d'interdiffusion d'environ 10 μm et une couche de β-NiAl stoechiométrique de 40 μm d'épaisseur. Une ana-lyse GDMS pratiquée sur une profondeur de 20 μm mon-tre que la teneur moyenne en zirconium est réduite par rapport à l'exemple précédent. De plus, le cément donneur étant différent (activité plus élevée), le profil de concentration obtenu est lui aussi différent, comme le montre la figure 2.

**Revendications**

1. Procédé pour former sur la surface d'un superalliage à base de nickel un revêtement protecteur contenant de l'aluminium, dans lequel on met en contact ledit superalliage et un précurseur non gazeux contenant de l'aluminium, à une température élevée, avec une atmosphère contenant un gaz actif qui réagit avec le précurseur pour former un composé d'aluminium gazeux, lequel se décompose au contact du superalliage en y déposant de l'aluminium métallique, **caractérisé en ce que** ladite atmosphère contient un composé gazeux d'un métal modificateur qui se décompose au contact du superalliage en y déposant ledit métal modificateur, simultanément au dépôt d'aluminium, dans lequel le composé gazeux du métal modificateur est de l'oxychlorure de zirconium de telle sorte que du zirconium métallique se dépose simultanément au dépôt d'aluminium.

2. Procédé selon la revendication 1, dans lequel ledit gaz actif est constitué au moins en partie par ledit composé gazeux.

3. Procédé selon la revendication 2, dans lequel ledit gaz actif est constitué exclusivement par ledit composé gazeux.

4. Procédé selon la revendication 2, dans lequel ledit gaz actif contient en outre au moins un composé d'ammonium.

5. Procédé selon l'une des revendications précédentes, dans lequel ledit gaz actif et/ou ledit composé gazeux sont formés par vaporisation d'au moins une substance solide à température ambiante, mélangée audit précurseur.

6. Procédé selon l'une des revendications précédentes, dans lequel le superalliage à base de nickel contient au moins un élément qui se combine avec l'aluminium pour former dans le revêtement un composé intermétallique dans lequel l'aluminium est partiellement substitué par le métal modificateur.

7. Procédé selon la revendication 6, dans lequel ledit élément est le nickel et ledit composé intermétallique est $\beta$-NiAl.

8. Procédé selon l'une des revendications 1, 2 et 4 à 7, dans lequel ledit gaz actif contient au moins un composé choisi parmi $NH_4Cl$, $NH_4F$ et $NH_4F$, HF.

9. Procédé selon l'une des revendications précédentes, dans lequel ledit précurseur est un alliage d'aluminium et de chrome.

10. Procédé selon l'une des revendications précédentes, dans lequel le superalliage et le précurseur sont distants l'un de l'autre.

11. Procédé selon la revendication 10, dans lequel le superalliage est disposé au-dessus du précurseur.

12. Procédé selon l'une des revendications 1 à 9, dans lequel le superalliage et le précurseur sont en contact.

13. Procédé selon l'une des revendications précédentes, dans lequel le superalliage et le précurseur sont disposés dans une enceinte n'autorisant que des échanges limités avec l'extérieur.

14. Procédé selon l'une des revendications précédentes, dans lequel ladite atmosphère est formée, outre le gaz actif et le composé gazeux, d'un gaz inerte ou réducteur et de préférence d'hydrogène.

15. Procédé selon l'une des revendications précédentes, dans lequel l'élément modificateur est contenu dans ledit revêtement protecteur en une concentration massique inférieure à 0,5 %.

16. Procédé selon la revendication 15, dans lequel ladite concentration massique est comprise entre 500 et 1000 ppm et de préférence d'environ 800 ppm.

17. Procédé selon l'une des revendications précédentes, dans lequel ladite température élevée est comprise entre 950 et 1200 °C et de préférence d'environ 1080 °C.

**Patentansprüche**

1. Verfahren zum Bilden, auf der Oberfläche einer Superlegierung auf der Basis von Nickel, eines Schutzüberzugs, der Aluminium enthält, bei dem die Superlegierung mit einem nicht-gasförmigen Vorläufer, der Aluminium enthält, in Kontakt gebracht wird, bei einer erhöhten Temperatur, mit einer Atmosphäre, die ein aktives Gas enthält, das mit dem Vorläufer reagiert, um eine gasförmige Aluminiumverbindung zu bilden, die sich beim Kontakt der Superlegierung zersetzt unter Ablagerung von metallischem Aluminium auf ihm, **dadurch gekennzeichnet, dass** die Atmosphäre eine gasförmige Verbindung eines Modifikatormetalls enthält, die sich bei Kontakt mit der Superlegierung zerlegt, unter Einlagerung des Modifikatormetalls in sie, gleichzeitig zur Ablagerung des Aluminiums, bei dem die gasförmige Verbindung des Modifikatormetalls Zirkoniumoxychlorid ist, derart, dass das metallische Zirkonium sich gleichzeitig mit der Ablagerung des Aluminiums ablagert.

2. Verfahren nach Anspruch 1, bei dem das aktive Gas aus wenigstens einem Teil durch die gasförmige Verbindung gebildet wird.

3. Verfahren nach Anspruch 2, bei dem das aktive Gas ausschließlich durch die gasförmige Verbindung gebildet wird.

4. Verfahren nach Anspruch 2, bei dem das aktive Gas darüber hinaus wenigstens eine Ammoniumverbindung enthält.

5. Verfahren nach einem der vorhergehenden Ansprüche, bei dem das aktive Gas und/oder die gasförmige Verbindung durch Verdampfen wenigstens einer festen Substanz bei Umgebungstemperatur gebildet wird, vermischt mit dem Vorläufer.

6. Verfahren nach einem der vorhergehenden Ansprüche, bei dem die Superlegierung auf der Basis von Nickel wenigstens ein Element enthält, das mit dem Aluminium verbunden wird, um in dem Überzug eine intermetallische Verbindung zu bilden, bei der das Aluminium teilweise durch das Modifikatormetall ersetzt ist.

7. Verfahren nach Anspruch 6, bei dem das Element der Nickel ist und die intermetallische Verbindung $\beta$-NiAl ist.

8. Verfahren nach einem der Ansprüche 1, 2 und 4 bis 7, bei dem das aktive Gas wenigstens eine Verbindung gewählt aus $NH_4Cl$, $Nh_4F$ und $NH_4F$, HF ist.

9. Verfahren nach einem der vorhergehenden Ansprüche, bei dem der Vorläufer eine Legierung aus Aluminium und Chrom ist.

10. Verfahren nach einem der vorhergehenden Ansprüche, bei dem die Superlegierung und der Vorläufer voneinander beabstandet sind.

11. Verfahren nach Anspruch 10, bei dem die Superlegierung oberhalb des Vorläufers angeordnet ist.

12. Verfahren nach einem der Ansprüche 1 bis 9, bei dem die Superlegierung und der Vorläufer in Kontakt sind.

13. Verfahren nach einem der vorhergehenden Ansprüche, bei dem die Superlegierung und der Vorläufer in einer Hülle angeordnet sind, die nur einen begrenzten Austausch mit dem Äußeren zulässt.

14. Verfahren nach einem der vorhergehenden Ansprüche, bei dem die Atmosphäre, außer das aktive Gas und die gasförmige Verbindung, aus einem inerten Gas oder einem Reduktionsgas und vorzugsweise aus Wasserstoff gebildet ist.

15. Verfahren nach einem der vorhergehenden Ansprüche, bei dem das Modifikatorelement in dem Schutzüberzug in einer Massenkonzentration enthalten ist, die geringer ist als 0,5 %.

16. Verfahren nach Anspruch 15, bei dem die Massenkonzentration zwischen 500 und 1000 ppm und vorzugsweise ungefähr bei 800 ppm liegt.

17. Verfahren nach einem der vorhergehenden Ansprüche, bei dem die erhöhte Temperatur zwischen 950 und 1200 °C und bevorzugt ungefähr bei 1080 °C liegt.


**Claims**

1. Process for forming a protective coating containing aluminium on the surface of a nickel-based superalloy in which the said superalloy and a non-gaseous precursor containing aluminium are placed in contact at a high temperature with an atmosphere containing an active gas which reacts with the precursor to form a gaseous aluminium compound which decomposes on contact with the superalloy depositing aluminium metal thereon, **characterised in that** the said atmosphere contains a gaseous compound of a modifier metal which decomposes on contact with the superalloy and deposits the said modifier metal thereon simultaneously with the deposition of aluminium, in which the gaseous compound of the modifier metal is zirconium oxychloride so that metallic zirconium is deposited simultaneously with the deposition of aluminium.

2. Process according to claim 1, in which the said active gas at least in part comprises the said gaseous compound.

3. Process according to claim 2, in which the said active gas solely comprises the said gaseous compound.

4. Process according to claim 2, in which the said active gas also contains at least one ammonium compound.

5. Process according to one of the preceding claims, in which the said active gas and/or the said gaseous compound are formed by the vaporisation of at least one substance which is solid at ambient temperature mixed with the said precursor.

6. Process according to one of the preceding claims, in which the nickel-based superalloy contains at least one element which combines with the aluminium to form an intermetallic compound within the coating in which the aluminium is partly substituted by the modifier metal.

7. Process according to claim 6, in which the said element is nickel and the said intermetallic compound is $\beta$-NiAl.

8. Process according to one of claims 1, 2 and 4 to 7, in which the said active gas contains at least one compound selected from $NH_4Cl$, $NH_4F$ and $NH_4F,HF$.

9. Process according to one of the preceding claims, in which the said precursor is an alloy of aluminium and chromium.

10. Process according to one of the preceding claims, in which the superalloy and the precursor are at a distance from each other.

11. Process according to claim 10, in which the superalloy is located above the precursor.

12. Process according to one of claims 1 to 9, in which the superalloy and the precursor are in contact.

13. Process according to one of the preceding claims, in which the superalloy and the precursor are located in an enclosure permitting only limited exchanges with the exterior.

14. Process according to one of the preceding claims, in which in addition to the active gas and the gaseous compound the said atmosphere comprises an inert or reducing gas and preferably hydrogen.

**15.** Process according to one of the preceding claims, in which the modifier element is present in the said protective coating in a concentration by mass of less than 0.5%.

**16.** Process according to claim 15, in which the said concentration by mass lies between 500 and 1000 ppm and is preferably approximately 800 ppm.

**17.** Process according to one of the preceding claims, in which the said high temperature lies between 950 and 1200°C and is preferably approximately 1080°C.

**EP 1 466 996 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1433497 A